# EUROPEAN PATENT SPECIFICATION

(11) **EP 1 899 151 B1**
(45) Date of publication and mention of the grant of the patent: **18.11.2009**
(21) Application number: 06763901.3
(22) Date of filing: 26.06.2006
(51) Int. Cl.: B29D 30/30, B29D 30/60

(54) **METHOD AND MACHINE FOR RUBBERIZING AN ANNULAR SURFACE OF A BODY**
VERFAHREN UND MASCHINE ZUM GUMMIEREN EINER RINGFÖRMIGEN FLÄCHE EINES KÖRPERS
PROCÉDÉ ET MACHINE POUR CAOUTCHOUTER UNE SURFACE ANNULAIRE D' UN CORPS

(30) Priority: 28.06.2005 IT TO20050450
(43) Date of publication of application: 19.03.2008
(73) Proprietor: Marangoni Meccanica S.P.A., 38068 Rovereto (IT)
(72) Inventor: MARANGONI, Giorgio, I-38068 Rovereto (IT); FAIT, Sergio, I-38068 Rovereto (IT)
(74) Representative: Jorio, Paolo
(86) International application number: PCT/EP2006/063566
(87) International publication number: WO 2007/000443

(56) References cited:
- EP-A- 0 968 814
- EP-A- 1 120 232
- US-A- 3 907 019
- US-A- 4 155 789
- US-A- 4 240 863
- US-A- 4 279 683
- DATABASE WPI Derwent Publications Ltd., London, GB; AN 1990-237081 XP002395946 -& SU 1 516 372 A (BELORUSS KIROV TECHN INS) 23 October 1989 (1989-10-23)

## Description

### TECHNICAL FIELD

The present invention relates to a method and machine for rubberizing an annular surface of a body, preferably, but not necessarily, a tyre carcass, to which the following description will make specific reference, without excluding general reference.

### BACKGROUND ART

In the rubber industry, it is known, for example from EP-0968814, to use, for rubberizing an annular surface of a tyre carcass, a rubberizing machine, in which the carcass to be rubberized is fitted onto a spindle to be brought into rotation about its axis by the thrust of a motor, and rubberizing is carried out by progressively coating the annular surface to be rubberized by means of a strip of elastomeric material, of a determined section, applied to the annular surface to be rubberized by a feeder comprising an extruder for the production of elastomeric material in the form of a normally circular section band, an applicator roller positioned tangential to the annular surface to be rubberized, and a feeding line that passes the elastomeric material from the extruder to the applicator roller. The feeding line generally comprises a plurality of components arranged in series, and at least one of these components is a calender adapted to transform the band produced by the extruder into the mentioned strip of determined section.

In the known machines of the type described above, the applicator roller and the spindle are supported in such a way as to be able to effect, with respect to each other, relative motion both parallel and orthogonal to the axis of rotation of the spindle, and about an axis orthogonal to the axis of rotation of the spindle, and the motor of the spindle is a variable speed motor.

In rubberizing an annular surface of a tyre carcass, one of the most difficult problems to solve is the control, according to a determined law, of the quantity of elastomeric material applied, at any time, to the annular surface to be rubberized.

In EP-1 230 080, in which an elastomeric material is extruded directly onto the annular surface to be rubberized, the above-mentioned problem is resolved by adjusting the application speed of the elastomeric material, that is the angular velocity of the spindle, so as to regulate the stretch applied to the elastomeric material at the application point and, therefore, to regulate according to a determined law, and from one point on the annular surface to be rubberized to another, the shape and the dimensions of the section of the strip of elastomeric material that is spread onto the annular surface to be rubberized.

The solution proposed by EP-1 230 080 may in itself be problematic, since the physical characteristics of the bond created between the carcass to be rubberized and the strip of elastomeric material applied depend considerably on the stretch applied to the elastomeric material at the application point, and a variation in this stretch from one point of the annular surface to be rubberized to another may cause the formation of rubber layers that are not homogeneous in their mechanical bonding to the carcass.

The above considerations also apply to US-4,240,863, where an apparatus is disclosed for applying a strip of elastomeric material to a surface to be rubberized, the apparatus comprising a feeder in turn comprising an extruder for the production of elastomeric material in the form of a band, an applicator roller positioned tangential to the surface to be rubberized, and a feeding line that passes the elastomeric material from the extruder to the applicator roller and includes a belt conveyor. In this apparatus, a first amount of stretch is applied by driving the belt conveyor at a controlled higher linear rate than the rate of extrusion of the band from the extruder; and a second amount of stretch may be applied by moving the surface to be rubberized at a controlled greater rate than the rate of movement of the belt conveyor. In this way, a very precise control on the overall stretching occurring between the extruder and the applicator roller is obtained, but no control is applied to a third amount of stretching, which is always present between the applicator roller and the surface to be rubberized, and which is normally a variable amount of stretching. This third amount of stretching, which is due to irregularities in the torque transmission between the spindle and the applicator roller, has a great influence not only on the physical characteristics of the bond created between the surface to be rubberized and the strip of elastomeric material applied thereto, but also on the quantity of rubber applied to the surface to be rubberized.

### DISCLOSURE OF INVENTION

The object of the present invention is to provide a method for rubberizing an annular surface of a body, which makes it possible to control precisely, according to a determined law, the quantity of elastomeric material applied, at any time, to the annular surface to be rubberized without encountering the above-mentioned drawback stemming from variable physical characteristics of the bond created between the surface to be rubberized and the strip of elastomeric material applied thereto.

According to the present invention there is provided a method for rubberizing an annular surface of a body as set forth in the claim 1 and, preferably, as set forth in any of the subsequent claims, directly or indirectly dependent from claim 1.

According to the present invention a machine for rubberizing an annular surface of a body is also described, as set forth in claim 10 and, preferably, as set forth in any of the subsequent claims, directly or indirectly dependent from claim 10.

### BRIEF DESCRIPTION OF THE DRAWINGS

The present invention will now be described by way of examples with reference to the accompanying drawings, in which:
- figure 1 shows schematically and in elevational side view a first preferred embodiment of the machine according to the present invention;
- figure 2 shows in enlarged scale a detail of figure 1;
- figure 3 shows a plan view of the detail of figure 2; and
- figure 4 shows schematically and in elevational side view a second preferred embodiment of the machine according to the present invention.

### BEST MODE FOR CARRYING OUT THE INVENTION

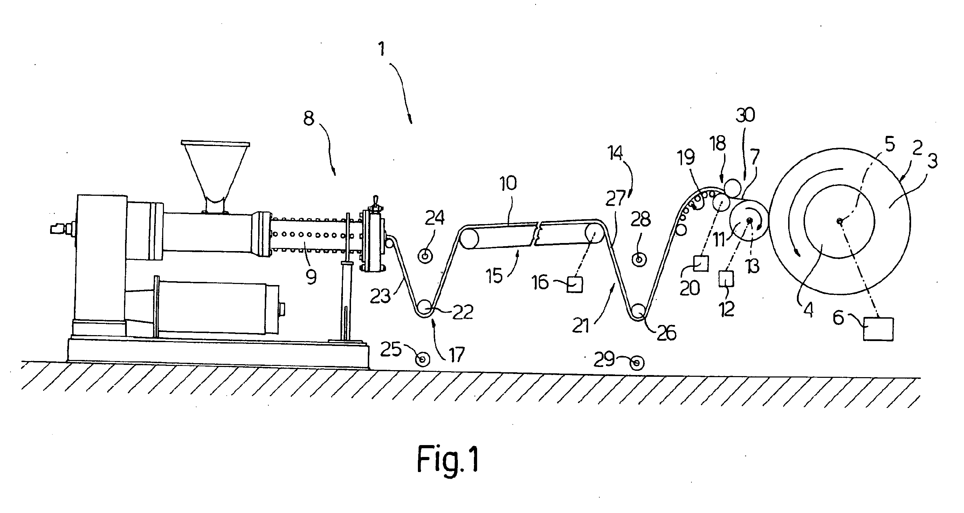

In figure 1, it is indicated by 1, as a whole, a machine for hot rubberizing an annular surface 2 of a body, in the case in point a toroidal body comprising a tyre carcass 3, fitted on a spindle 4 so as to be brought into rotation about an axis 5 thereof, coaxial to the annular surface 2, under the thrust of a variable speed motor 6.

The annular surface 2 is rubberized by progressively coating the annular surface 2 itself by means of a strip 7, of a predetermined section, of elastomeric material applied to the annular surface 2 by a feeder 8, being part of the machine 1 and comprising a screw extruder 9 for producing elastomeric material in the form of a band 10 normally of circular section, an applicator roller 11 arranged tangential, in use, to the annular surface 2 itself and fitted to turn, under the thrust of a drive unit 12, about an axis 13 parallel to an axis 5 and defining, with axis 5, a plane P.

The machine 1 further comprises a feeding line 14 which passes the elastomeric material from the extruder 9 to the applicator roller 11.

The feeding line 14 comprises a conveyor belt 15 which receives the band 10 and provided with a drive unit 16; a first dandy roll device 17 arranged between an outlet of the extruder 9 and an inlet of the conveyor belt 15; a calender 18, which is arranged between an outlet of the conveyor belt 15 and the applicator roller 11, is provided with an entry guide 19 and a drive unit 20 and is adapted to receive the band 10 and transform it into the strip 7; and a second dandy roll device 21 arranged between the outlet of the conveyor belt 15 and the entry guide 19.

The dandy roll device 17 is adapted to control the drive unit 16 of the conveyor 15 and comprises a dandy roll device 22 supported, in use, by band 10 at a loop 23 and mobile, following the variations in length of the loop 23, within a field defined by two sensors 24 and 25, of which the sensor 24 is arranged above the sensor 25 and at a determined distance from sensor 25.

Similarly, the dandy roll device 21 is adapted to control the speed of the screw (not illustrated) of the extruder 9 and comprises a dandy roll device 26 supported, in use, by the band 10 at a loop 27 and mobile, following the variations in length of the loop 27, within a field defined by two sensors 28 and 29, of which the sensor 28 is arranged above the sensor 29 and at a determined distance from the sensor 29.

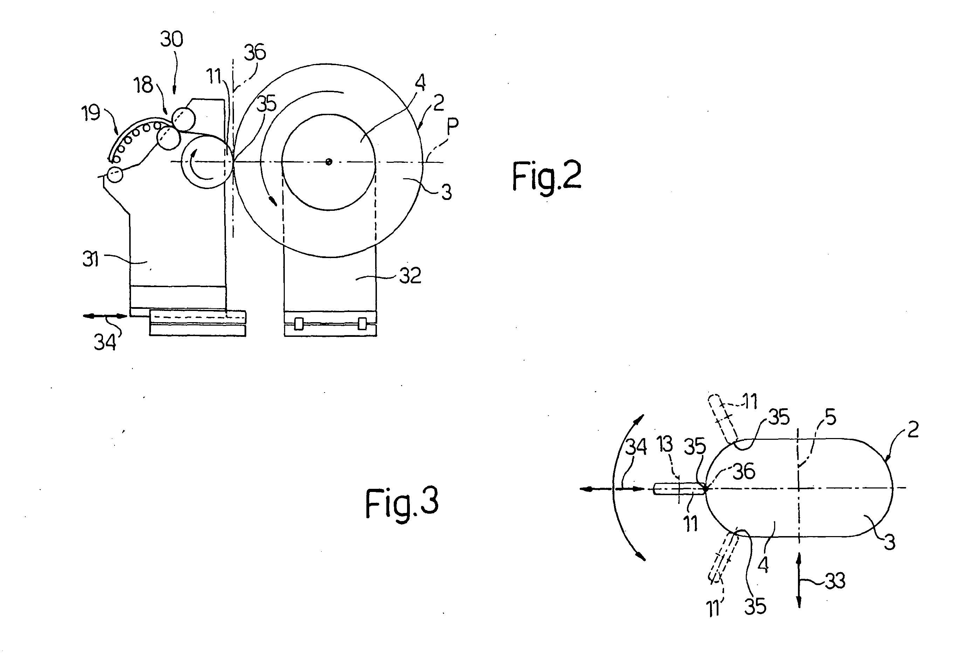

As better shown in figures 2 and 3, the calender 18 defines, together with the relative entry guide 19 and the applicator roller 11, a forming machine 30 provided with a single base 31; the spindle 4 is supported by a relative base 32; and bases 31 and 32 are motorised so as to effect, with respect to each other and in a known and not illustrated manner, relative movements in a direction 33 parallel to the axes 5 and 13; relative approach movements in a direction 34 parallel to plane P and orthogonal to direction 33 from and to a contact position, in which the applicator roller 11 is arranged in contact with the annular surface 2 at an application point (or zone) 35 arranged on the plane P; and a relative rotation around an axis 36 orthogonal to the plane P.

In use, the machine 1 carries out a hot rubberizing procedure on the annular surface 2 of the carcass 3 forming, on the annular surface 2 itself, both the sidewalls (not illustrated), and the tread (not illustrated), by applying to the annular surface 2, the strip 7 normally arranged, in a known manner, with a determined inclination and on one or more layers.

In the machine 1, the applicator roller 11 is urged into contact, with a determined pressure, with the annular surface 2 at the application point 35, and the band 10 produced by the extruder 9 is fed to the conveyor belt 15 through the dandy roll device 17 and, therefore, through the dandy roll device 21 to the entry guide 19 of the calender 18, which transforms the band 10 into the strip 7 and feeds the strip 7 itself to the applicator roller 11. The strip 7 is arranged in contact with the applicator roller 11 along an arc of approximately 90°, at the end of which the strip 7 itself is transferred to the carcass 3 at the application point 35, which is moved, by relative movement of the bases 31 and 32 with respect to each other and by bringing the carcass 3 into rotation about the axis 5, such that the applicator roller 11 is allowed to brush the entire annular surface 2.

The hot rubberizing procedure described above can be controlled by two different principal control modes which both envisage constant application speed of the strip 7 on the annular surface 2 and constant stretch of the strip 7 at the application point 35.

Here it is convenient to recall that the application of constant stretch to the strip 7 at the application point 35 corresponds to both the constant bonding features of the strip 7 to the carcass 3 and to constant deformation of the section of the strip 7 when the strip 7 itself passes from the applicator roller 11 to the carcass 3.

According to a first control mode, during the start-up transient, the motor 6 is adjusted so as to give a determined value to the speed of the carcass 3 at the application point 35; subsequently motor 6 is adjusted such that it will maintain this speed, constantly equal to the mentioned determined value at the application point 35. Since the distance of the application point 35 from the axis 5 varies during the rubberizing of the annular surface 2, the adjustment of motor 6 is such that the spindle 4 is given a variable angular speed inversely proportionally to the distance of the application point 35 from the axis 5.

The drive unit 12 of the applicator roller 11 is a slave to the motor 6 so as to give the applicator roller 11 itself a peripheral speed at most equal to the application speed, but preferably less than the application speed by a determined constant value. For this purpose, the drive unit 12 is composed of a transmission (not illustrated) arranged between the motor 6 and the applicator roller 11 and capable of establishing, between the speed of the application point 35 and the peripheral speed of the applicator roller 11, a differential with constant value and, therefore, capable of applying constant stretch to the strip 7 when the strip 7 itself passes from the applicator roller 11 to the annular surface 2; or the drive unit 12 is composed of a slave motor (not illustrated) served by the motor 6 to maintain the afore-mentioned constant value of differential speed between the applicator roller 11 and the carcass 3.

Similarly, the drive unit 20 of the calender 18 is a slave to the motor 6 so as to give the calender 18 itself a normally constant speed at most equal to the application speed. In the machine 1, the speed of the calender 18 is preferably maintained lower than the application speed by a first determined value, which in normal operating conditions is a constant value, and lower than the peripheral speed of the applicator roller 11 by a second value, which in normal operating conditions is a determined constant value lower than the former. In this way, a further speed differential, normally of constant value, is established between the feed speed of the strip 7 through the calender 18 and the peripheral speed of the applicator roller 11, corresponding to the application to said strip 7, of a further stretch, normally constant between the calender 18 and the applicator roller 11.

The above description shows that, using the machine 1, it is possible to apply two stretches in series to the strip 7, of which the latter, applied between the applicator roller 11 and the application point 35, is strictly constant. If the further stretch, applied to the strip 7 upstream of the applicator roller 11, is maintained constant, the strip 7 applied to the annular surface 2 is a strip of strictly constant section.

In the case of particular requirements, where variations should be given, according to a determined law and from one point to another of the annular surface 2, to the section of the applied strip 7, it will be sufficient to adjust, according to a determined law, the drive unit 20 so as to apply to the strip 7 a variable stretch upstream of the applicator roller 11.

According to a further control mode, the dandy roll device 17 controls the speed of the screw (not illustrated) on the extruder 9, the dandy roll device 21 controls the speed of the motor 6 and, during the start-up transient, the extruder 9 is adjusted such that a determined value will be given to the output speed of the band 10; the speed of the conveyor belt 15 and the spindle 4 are adjusted so as to maintain the dandy roll devices 22 and 26 within central portions of the respective strokes, while the speed of the calender 18 and the applicator roller 11 are dependent, as in the previous case, on the speed of the spindle 4 which, as in the previous case, is adjusted so as to maintain constant application speed. In this case, too, since the distance of the application point 35 from the axis 5 varies during the rubberizing of the annular surface 2, the motor 6 is adjusted such that the spindle 4 is given a variable angular speed inversely proportionally to the distance of the application point 35 to the axis 5.

In a similar manner to when the machine is adjusted according to the first control mode described above, it is also possible in this case to apply to the strip 7 two stretches in series, of which the latter, applied to the strip 7 between the applicator roller 11 and the application point 35, is strictly constant. If the further stretch, applied to the strip 7 upstream of the applicator roller 11, is maintained constant, the strip 7 applied to the annular surface 2 is a strip with a strictly constant section. On the contrary, if, for particular requirements, variations should be given, according to a determined law and from one point to another of the annular surface, to the section of the strip 7 applied, it is sufficient to adjust, according to a determined law, the drive unit 20 so as to apply to the strip 7 a variable stretch upstream of the applicator roller 11.

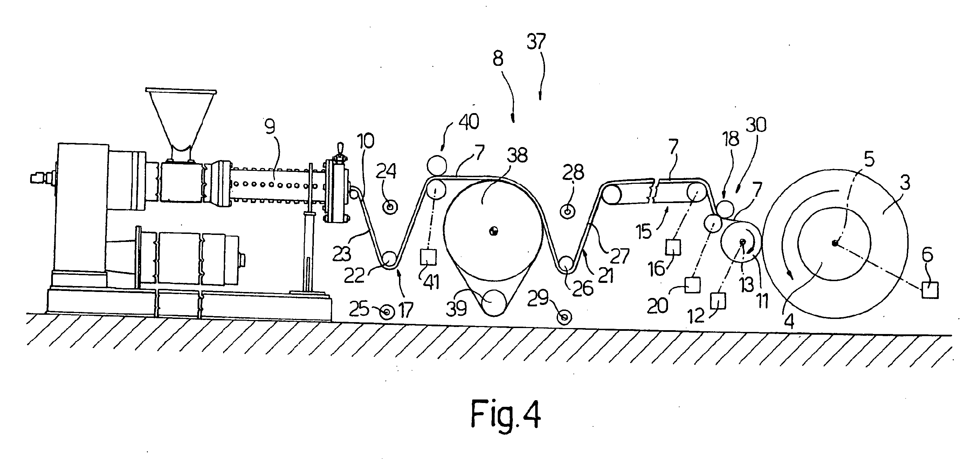

The embodiment illustrated in figure 4 relates to a machine 37 for cold rubberizing an annular surface 2 of a toroidal body, in the case in point, a tyre carcass 3.

The machine 37 is substantially similar to the machine 1, from which it differs in that, in the machine 37, the conveyor belt 15 is arranged downstream of the dandy roll device 21 and in the place of the entry guide 19 of the calender 18 used in the machine 1, and the drive unit 16 is a slave to the drive unit 20 of the calender 18 and is normally composed of a geared transmission (not illustrated) adapted to give the conveyor belt 15 a feed speed at most equal to, but normally slightly lower than, that of the calender 18, which, in the case of the machine 37, is not a real forming calender as in the case of the machine 1, but simply a finishing calender.

The machine 37 also differs from machine 1 because it comprises a cooling roller 38 arranged between the dandy roll devices 17 and 21 and brought into rotation by a drive unit 39, and a forming calender 40 similar to the calender 18 on machine 1 and arranged between the cooling roller 38 and the dandy roll device 17. The forming calender 40 is driven by a drive unit 41 slave to the drive unit 39 and normally composed of a geared transmission (not illustrated) adapted to give the forming calender 40 a feed speed at most equal to, but normally slightly lower than, the peripheral speed of the cooling roller 38.

In the machine 37, the dandy roll device 21 plays the simple role of mechanical accumulator and it does not perform any control function, while the dandy roll device 17 controls the screw speed of the extruder 9.

The cold rubberizing procedure carried out by the machine 37 is normally controlled in a similar manner to the first control modes of the hot rubberizing procedure carried out by machine 1 and allows, if desired, to apply to the elastomeric material, and in particular to the strip 7 (which in the case of the machine 37 is formed by the forming calender 40 and only subsequently perfected by the finishing calender 18), a first controlled stretch during the passage of the strip 7 from the forming calender 40 to the cooling roller 38; a second controlled stretch during the passage of said strip 7 from the conveyor belt 15 to the finishing calender 18; a third controlled stretch during the passage of the strip 7 from the finishing calender 18 to the applicator roller 11; and a final, always rigorously constant, stretch during the passage of the strip 7 from the applicator roller to the carcass 3.

Similarly as described for the machine 1, the mentioned first, second and third stretches applicable to the strip 7 in the machine 37 may be, as usually happens, constant, and in this case the dimensions and the shape of the section of the strip 7 applied to the annular surface 2 remain rigorously constant and determined by the intensity of these stretches and of the last stretch, or at least one of the mentioned three first stretches is varied according to a determined law so as to deposit on the annular surface 2 a strip 7 of variable section according to a determined law.

Obviously, in both machine 1 and machine 37, each of the stretches applicable to strip 7 before the last constant stretch applied between the applicator roller 11 and the carcass 3 may be equal to zero.

In conclusion, given the above description it is clear that in machines 1 and 37:
- by applying a constant controlled stretch to strip 7 between the applicator roller 11 and the carcass 3 it is possible to rubberize the carcass 3 itself along the annular surface 2 in a largely homogeneous manner from the view-point of the bonding of the elastomeric material to the annular surface 2 itself;
- by applying one or more controlled stretches to the strip 7 upstream of the applicator roller 11 it is possible to give the strip 7 itself determined transverse dimensions;
- if all the controlled stretches applied to the strip 7 upstream of the applicator roller are constant, the strip 7 which is applied to the annular surface 2 presents a section that remains rigorously constant, and the annular surface 2 is rubberized in a largely homogeneous manner from view-point of the bonding of the elastomeric material to the annular surface 2 itself;
- if at least one of the controlled stretches applied to the strip 7 upstream of the applicator roller 11 is a variable stretch according to a determined law, the strip 7 that is applied to the annular surface 2 presents a section that varies according to a determined law, while the annular surface 2 is always rubberized, even in this case, in a largely homogeneous manner from the view-point of the bonding of the elastomeric material to the annular surface 2 itself.

## Claims

1. A method for rubberizing an annular surface (2) of a body (3), the rubberizing being carried out by bringing the annular surface (2) into rotation about an axis (5) ; by progressively coating the annular surface (2) itself by means of a strip (7), of determined section, of elastomeric material, produced by an extruder (9), formed by at least one calender (18; 40, 18) and fed, at a given application speed, onto the annular surface (2) to be rubberized by an applicator roller (11) having a peripheral speed and arranged tangential to the annular surface (2) to be rubberized in an application point (35) of the strip (7); and by controlling the section of the strip (7);
**the method being characterized in that:**
the section of the strip (7) is controlled by positively controlling both the application speed and the peripheral speed so as to apply to the strip (7) a first stretch, always constant, between the applicator roller (11) and the annular surface to be rubberized; and by applying at least a further stretch upstream of the first stretch.

2. A method according to claim 1, in which the further stretch is constant so as to give the strip (7) a determined constant section.

3. A method according to claim 1, in which the further stretch is variable to give the strip (7) a variable section according to a determined law.

4. A method according to one of the previous claims, in which the elastomeric material is fed by a feeding line (14), which feeds the elastomeric material from the extruder (9) to the applicator roller (11) through a plurality of components arranged in series, at least one of which is composed of said calender (18; 40) for transforming a band (10) of elastomeric material produced by the extruder (9) into the strip (7) of determined section; at least one component of the feeding line being actuated so as to give the elastomeric material the further stretch upstream of the first stretch.

5. A method according to one of the previous claims, and comprising the steps of fitting the body (3) onto a spindle (4) with the annular surface (2) in a coaxial position to an axis (5) of the spindle (4); bringing the spindle (4) into rotation about the axis (5) so as to give the annular surface (2), at the application point (35), a determinated application speed; and reciprocally moving the applicator roller (11) and the spindle (4) to bring the application point (35) to brushing, with said application speed, the entire annular surface (2), the spindle (4) being powered at variable angular speed so as to maintain the application speed always equal to determined constant value; and the applicator roller (11) being slave to the spindle (4) so as to present a constant peripheral speed and to maintain equal to a determined constant value a speed differential existing between the application speed and the peripheral speed so as to apply to the strip (7) said first constant stretch in the passage between the applicator roller (11) and the annular surface (2).

6. A method according to one of the previous claims, in which the annular surface (2) is hot rubberized; the elastomeric material produced by the extruder (9) being shaped, to obtain said strip (7), using only one said calender (18) arranged immediately upstream of the applicator roller (11), and said further stretch being applied on the passage of the strip (7) between the calender (18) and the applicator roller (11).

7. A method according to one of the claims from 1 to 5, in which the annular surface (2) is cold rubberized; the elastomeric material produced by the extruder (9) being cooled by a cooling means (38) arranged upstream of the applicator roller (11) and being shaped, to obtain said strip (7), by means of one said calender (40) arranged immediately upstream of the cooling means (38); one said further stretch being applied during the passage of the strip (7) between said calender (40) and the cooling means (38).

8. A method according to claim 7, in which said strip (7) is further shaped by a further calender (18) arranged immediately upstream the applicator roller (11); a said further stretch being applied during the passage of the strip (7) between said further calender (18) and the applicator roller (11).

9. A method according to claim 7, in which said strip (7) is further shaped by a further calender (18) arranged immediately upstream of the applicator roller (11), and is fed to said further calender (18) by a conveyor belt (15); one said further stretch being applied during the passage of the strip (7) between the conveyor belt (15) and said further calender (18; 40, 18).

10. A machine for rubberizing an annular surface (2) of a body (3), the machine (1; 37) comprising a spindle (4) presenting an axis (5) and adapted to support the body (3) with the annular surface (2) to be rubberized coaxial to the axis (5); first drive means (6) to bring the spindle (4) into rotation about the axis (5); and a feeding unit (8) adapted to feed onto the annular surface (2) a strip (7) of elastomeric material presenting a section of determinated shape; the feeding unit (8) comprising an extruder (9) for the production of elastomeric material in the form of a band (10), a calender (18; 40) for transforming the band (10) of elastomeric material produced by the extruder (9) into the strip (7) of determined section, an applicator roller (11) arranged downstream from the calender (18; 40), having, in use, a peripheral speed and arranged, in use, tangential to the annular surface (2) to be rubberized at an application point (35) of the strip (7) to the annular surface (2) itself and mobile relative to the spindle (4) to bring the application point (35) to brushing, with a determined application speed equal to the speed of the application point (35) about the axis (5), the whole annular surface (2) in conjunction with a rotation of the spindle about the axis (5) itself; the machine being **characterised in that** the applicator roller (11) is slaved to the spindle (4) so as to maintain equal to a determined constant value the speed differential existing between the application speed and the peripheral speed to apply to the strip (7) a first constant stretch during the passage between the applicator roller (11) and the annular surface (2); and **in that** the feeding unit (8) is shaped so as to apply to the strip (7) a further stretch upstream of the first stretch.

11. A machine according to claim 10, in which the feeding unit (8) comprises a feeding line (14) of the elastomeric material from the extruder (9) to the applicator roller (11), and the feeding line (14) comprises a plurality of components arranged in series, at least one of which is said calender (18; 40) for transforming the band (10) of elastomeric material produced by the extruder (9) into the strip (7) of determined section; at least one component of the feeding line (14) being a motorised component provided with further driving means to give the elastomeric material a further stretch upstream of the first stretch.

12. A machine according to claim 11, in which the further driving means are adjusted such that said further stretch results in a constant value.

13. A machine according to claim 12, in which the further driving means is adjusted such that said further stretch results in a variable value according to a determined law.

14. A machine according to one of the claims from 11 to 13, in which the feeding line (14) comprises a conveyer belt (15) and a first and second dandy roll devices (17), (21) arranged between the extruder (9) and the conveyor belt (15) and, respectively, between the conveyor belt (15) and the calender (18); the calender (18) being said motorised component.

15. A machine according to claim 14, in which the first dandy roll device (17) controls the conveyor belt (15), while the second dandy roll device (21) controls the peripheral speed of the spindle (4).

16. A machine according to claim 14, in which the first dandy roll device (17) controls the conveyor belt (15), while the second dandy roll device (21) controls the extruder (9).

17. A machine according to one of the claims from 11 to 13, in which the feeding line (14) comprises a calender (40), a cooling roller (38) arranged downstream of the calender (40) and a first and second dandy roll devices (17), (21) arranged between the extruder (9) and the calender (40) and, respectively, downstream of the cooling roller (38); the calender (40) being said motorised component.

18. A machine according to claim 17, in which the feeding line (14) comprises a first calender (40); a cooling roller (38) arranged downstream of the first calender (40); a conveyor belt (15); a second calender (18); and a first and second dandy roll devices (17, 21) arranged between the extruder (9) and the first calender (40) and, respectively, between the cooling roller (38) and the conveyor belt (15); at least one of said first and second calenders (40, 18) and the conveyor belt (15) being one said motorised element.

19. A machine according to claim 17 or 18, in which the first dandy roll device (17) controls the extruder (9), while the second dandy roll device (21) is simply a mechanical compensator.

## Patentansprüche

1. Verfahren zum Gummieren einer ringförmigen Fläche bzw. Oberfläche (2) eines Körpers (3), wobei das Gummieren **dadurch** ausgeführt wird, dass die ringförmige Oberfläche (2) zum Drehen um eine Achse (5) gebracht wird; dass die ringförmige Oberfläche (2) selbst fortlaufend bzw. stufenweise mittels eines Streifens (7) vorbestimmten Schnitts bzw. Profils aus durch einen Extruder (9) hergestelltes, elastomeres Material beschichtet wird, das durch zumindest einen Kalander (18; 40, 18) gebildet und mit einer vorgegebenen Applikationsgeschwindigkeit auf die ringförmige Oberfläche (2) befördert wird, um von einer Applikatorrolle bzw. -walze (11) gummiert zu werden, die eine Umfangsgeschwindigkeit aufweist und tangential zu der zu gummierenden ringförmigen Oberfläche (2) in einem Applikationspunkt (35) des Streifens (7) angeordnet ist; und durch Steuern bzw. Regeln des Schnitts bzw. Profils des Streifens (7);
wobei das Verfahren **dadurch gekennzeichnet ist, dass**:
der Schnitt bzw. das Profil des Streifens (7) **dadurch** gesteuert bzw. geregelt wird, dass sowohl die Applikationsgeschwindigkeit als auch die Umfangsgeschwindigkeit positiv bzw. zwangsgesteuert bzw. -geregelt werden, um dem Streifen (7) eine erste, immer konstante Streckung zwischen der Applikatorrwalze (11) und der zu gummierenden ringförmigen Oberfläche zu verleihen; und dass eine weitere Streckung stromaufwärts der ersten Streckung bzw. dieser vorgelagert verliehen wird.

2. Verfahren nach Anspruch 1, bei dem die weitere Streckung konstant ist, um dem Streifen (7) einen vorbestimmten, konstanten Schnitt bzw. Profil zu geben.

3. Verfahren nach Anspruch 1, bei dem die weitere Streckung variabel ist, um dem Streifen (7) einen variablen Schnitt bzw. Profil gemäß einem vorbestimmten Gesetz bzw. Gesetzmäßigkeit zu geben.

4. Verfahren nach einem der vorhergehenden Ansprüche, bei dem das elastomere Material von einer Förderstraße bzw. -linie (14) befördert wird, die das elastomere Material von dem Extruder (9) zu der Applikatorwalze (11) durch eine Mehrzahl von in Reihe angeordneter Komponenten bzw. Bauteilen befördert, von denen zumindest eine bzw. eines aus dem Kalander (18; 40) besteht, um ein Band (10) aus elastomerem Material, das von dem Extruder (9) hergestellt wird, in einen Streifen (7) vorbestimmten Schnitts bzw. Profils umzuwandeln; wobei zumindest ein Bauteil der Förderstraße betätigt wird, um dem elastomeren Material stromaufwärts der ersten Streckung die weitere Streckung zu verleihen.

5. Verfahren nach einem der vorhergehenden Ansprüche, und umfassend die Schritte: Passen des Körpers (3) auf eine Spindel (4), wobei die ringförmige Oberfläche (2) in einer koaxialen Position zu einer Achse (5) der Spindel (4) ist; Veranlassen, dass sich die Spindel (4) um die Achse (5) dreht, um der ringförmigen Oberfläche (2) an dem Applikationspunkt (35) einen vorbestimmte Applikationsgeschwindigkeit zu geben; und reziprokes Bewegen der Applikatorwalze (11) und der Spindel (4), um den Applikationspunkt (35) zu veranlassen, die gesamte ringförmige Oberfläche (2) mit der Applikationsgeschwindigkeit zu streichen bzw. zu bürsten, wobei die Spindel (4) mit variabler Winkelgeschwindigkeit betrieben wird, um die Applikationsgeschwindigkeit immer gleich eines vorbestimmten, konstanten Werts zu halten; und wobei die Applikatorwalze (11) der Spindel (4) untergeordnet ist, um eine konstante Umfangsgeschwindigkeit zu präsentieren bzw. vorzugeben und um einen Geschwindigkeitsunterschied, der zwischen der Applikationsgeschwindigkeit und der Umfangsgeschwindigkeit besteht, gleich einem vorbestimmten, konstanten Wert zu halten, um dem Streifen (7) beim Durchgang zwischen der Applikatorwalze (11) und der ringförmigen Oberfläche (2) die erste konstante Streckung zu verleihen.

6. Verfahren nach einem der vorhergehenden Ansprüche, bei dem die ringförmige Oberfläche (2) heißgummiert wird; das elastomere Material von dem Extruder (9) durch Formen hergestellt wird, um den Streifen (7) zu erhalten, und zwar unter Verwendung nur eines Kalanders (18), der direkt stromaufwärts der Applikatorwalze (11) angeordnet ist, und wobei die weitere Streckung beim Durchgang des Streifens (7) zwischen dem Kalander (18) und der Applikatorwalze (11) verliehen wird.

7. Verfahren nach einem der Ansprüche 1 bis 5, bei dem die ringförmige Oberfläche (2) kaltgummiert wird; das elastomere Material von dem Extruder (9) durch Abkühlen durch ein Kühlmittel bzw. eine Kühleinrichtung (38) hergestellt wird, die stromaufwärts der Applikatorwalze (11) angeordnet ist, und geformt wird, um den Streifen (7) zu erhalten, und zwar mittels des einen Kalanders (40), der direkt stromaufwärts der Kühleinrichtung (38) angeordnet ist; wobei die eine weitere Streckung während des Durchgangs des Streifens (7) zwischen dem Kalander (40) und der Kühleinrichtung (38) verliehen wird.

8. Verfahren nach Anspruch 7, bei dem der Streifen (7) ferner von einem weiteren Kalander (18) geformt wird, der direkt stromaufwärts der Applikatorwalze (11) angeordnet ist; wobei eine weitere Streckung während des Durchgangs des Streifens (7) zwischen dem weiteren Kalander (18) und der Applikatorwalze (11) verliehen wird.

9. Verfahren nach Anspruch 7, bei dem der Streifen (7) ferner von einem weiteren Kalander (18) geformt wird, der direkt stromaufwärts der Applikatorwalze (11) angeordnet ist, und durch ein Förderband (15) zu dem weiteren Kalander (18) befördert wird; wobei die eine weitere Streckung während des Durchgangs des Streifens (7) zwischen dem Förderband (15) und dem weiteren Kalander (18; 40, 18) verliehen wird.

10. Maschine zum Gummieren einer ringförmigen Fläche bzw. Oberfläche (2) eines Körpers (3), wobei die Maschine (1; 37) umfasst: eine Spindel (4), die eine Achse (5) präsentiert bzw. vorgibt und angepasst ist, den Körper (3) mit der zu gummierenden ringförmigen Oberfläche (2) koaxial zu der Achse (5) zu tragen bzw. zu stützen; erste Antriebsmittel (6), um die Spindel (4) zum Drehen um die Achse (5) zu bringen; und eine Fördereinheit (8), die angepasst ist, einen Streifen (7) aus elastomerem Material, der einen Schnitt bzw. Profil vorbestimmter Form präsentiert bzw. vorgibt, auf die ringförmige Oberfläche (2) zu befördern; wobei die Fördereinheit (8) umfasst: einen Extruder (9) für die Herstellung von elastomerem Material in der Form eines Bands (10), einen Kalander (18; 40) zum Umwandeln des Bands (10) aus elastomerem Material, das von dem Extruder (9) hergestellt wird, in den Streifen (7) vorbestimmten Schnitts bzw. Profils, eine Applikatorrolle bzw. -walze (11), die stromaufwärts des Kalanders (18; 40) bzw. diesem vorgelagert angeordnet ist und bei Gebrauch eine Umfangsgeschwindigkeit aufweist und bei Gebrauch tangential zu der zu gummierenden ringförmigen Oberfläche (2) an einem Applikationspunkt (35) des Streifens (7) zu der ringförmigen Oberfläche (2) selbst und mobil bzw. beweglich relativ zu der Spindel (4) angeordnet ist, um den Applikationspunkt (35) zu veranlassen, mit einer vorbestimmten Applikationsgeschwindigkeit, die gleich der Geschwindigkeit des Applikationspunkts (35) um die Achse (5) ist, die gesamte ringförmige Oberfläche (2) zu streichen bzw. zu bürsten, und zwar zusammen mit einer Drehung der Spindel um die Achse (5) selbst; wobei die Maschine **dadurch gekennzeichnet ist, dass** die Applikatorwalze (11) der Spindel (4) untergeordnet ist, um einen Geschwindigkeitsunterschied, der zwischen der Applikationsgeschwindigkeit und der Umfangsgeschwindigkeit besteht, gleich einem vorbestimmten, konstanten Wert zu halten, um dem Streifen (7) beim Durchgang zwischen der Applikatorwalze (11) und der ringförmigen Oberfläche (2) eine erste konstante Streckung zu verleihen; und **dadurch**, dass die Fördereinheit (8) geformt ist, um dem Streifen (7) eine weitere Streckung stromaufwärts der ersten Streckung zu verleihen.

11. Maschine nach Anspruch 10, bei der die Fördereinheit (8) eine Förderstraße bzw. -linie (14) des elastomeren Materials von dem Extruder (9) zu der Applikatorwalze (11) umfasst, und die Förderstraße (14) eine Mehrzahl von in Reihe angeordneter Komponenten bzw. Bauteilen umfasst, von denen zumindest eine bzw. eines der Kalander (18; 40) ist, um das Band (10) aus elastomerem Material, das von dem Extruder (9) hergestellt wird, in den Streifen (7) vorbestimmten Schnitts bzw. Profils umzuwandeln; wobei zumindest ein Bauteil der Förderstraße (14) ein motorisiertes Bauteil ist, das mit weiteren Antriebsmitteln versehen ist, um dem elastomeren Material stromaufwärts der ersten Streckung eine weitere Streckung zu verleihen.

12. Maschine nach Anspruch 11, bei der die weiteren Antriebsmittel so eingestellt sind, dass die weitere Streckung in einem konstanten Wert resultiert.

13. Maschine nach Anspruch 12, bei der das weitere Antriebsmittel so eingestellt ist, dass die weitere Streckung in einem variablen Wert gemäß einem vorbestimmten Gesetz bzw. Gesetzmäßigkeit resultiert.

14. Maschine nach einem der Ansprüche 11 bis 13, bei der die Förderstraße (14) ein Förderband (15) und eine erste und eine zweite Vordruckrollen- bzw.
- walzenvorrichtung (17), (21) umfasst, die zwischen dem Extruder (9) und dem Förderband (15) bzw. zwischen dem Förderband (15) und dem Kalander (18) angeordnet sind; wobei der Kalander (18) das motorisierte Bauteil ist.

15. Maschine nach Anspruch 14, bei der die erste Vordruckrollenvorrichtung (17) das Förderband (15) steuert bzw. regelt, während die zweite Vordruckrollenvorrichtung (21) die Umfangsgeschwindigkeit der Spindel (4) steuert bzw. regelt.

16. Maschine nach Anspruch 14, bei der die erste Vordruckrollenvorrichtung (17) das Förderband (15) steuert bzw. regelt, während die zweite Vordruckrollenvorrichtung (21) den Extruder (9) steuert bzw. regelt.

17. Maschine nach einem der Ansprüche 11 bis 13, bei der die Förderstraße (14) einen Kalander (40), eine Kühlrolle bzw. -walze (38), die stromabwärts des Kalanders (40) bzw. diesem nachgelagert angeordnet ist, und eine erste und eine zweite Vordruckrollenvorrichtung (17), (21) umfasst, die zwischen dem Extruder (9) und dem Kalander (40) bzw. stromabwärts der Kühlwalze (38) angeordnet sind; wobei der Kalander (40) das motorisierte Bauteil ist.

18. Maschine nach Anspruch 17, bei der die Förderstraße (14) einen ersten Kalander (40); eine Kühlrolle bzw. -walze (38), die stromabwärts des ersten Kalanders (40) angeordnet ist; ein Förderband (15); einen zweiten Kalander (18); und eine erste und eine zweite Vordruckrollen- bzw. -walzenvorrichtung (17, 21) umfasst, die zwischen dem Extruder (9) und dem ersten Kalander (40) bzw. zwischen der Kühlwalze (38) und Förderband (15) angeordnet sind; wobei zumindest einer des ersten und zweiten Kalanders (40, 18) und des Förderbands (15) das motorisierte Bauteil ist.

19. Maschine nach Anspruch 17 oder 18, bei der die erste Vordruckrollenvorrichtung (17) den Extruder (9) steuert bzw. regelt, während die zweite Vordruckrollenvorrichtung (21) lediglich ein mechanischer Kompensator ist.

## Revendications

1. Méthode pour caoutchouter une surface annulaire (2) d'un corps (3), le caoutchoutage étant réalisé en amenant la surface annulaire (2) en rotation autour d'un axe (5) ; en recouvrant progressivement la surface annulaire (2) même au moyen d'une bande (7) de matériau élastomère ayant une section déterminée, produite par une extrudeuse (9), formée par au moins une calandre (18 ; 40, 18) et alimentée, à une vitesse d'application donnée, sur la surface annulaire (2) devant être caoutchoutée par un rouleau applicateur (11) ayant une vitesse périphérique et disposé tangentiellement à la surface annulaire (2) devant être caoutchoutée sur un point d'application (35) de la bande (7) ; et en contrôlant la section de la bande (7) ;
la méthode étant **caractérisé en ce que** :
la section de la bande (7) est commandée en commandant positivement à la fois la vitesse d'application et la vitesse périphérique de façon à appliquer à la bande (7) un premier étirement, toujours constant, entre le rouleau applicateur (11) et la surface annulaire devant être caoutchoutée ; et en appliquant au moins un étirement supplémentaire en amont du premier étirement.

2. Méthode selon la revendication 1, dans laquelle l'étirement supplémentaire est constant de façon à donner à la bande (7) une section constante déterminée.

3. Méthode selon la revendication 1, dans laquelle l'étirement supplémentaire est variable pour donner à la bande (7) une section variable selon une loi déterminée.

4. Méthode selon l'une des revendications précédentes, dans laquelle le matériau élastomère est alimenté par une ligne d'alimentation (14), qui alimente le matériau élastomère de l'extrudeuse (9) au rouleau applicateur (11) à travers une pluralité de composants disposés en série, dont au moins un est composé de ladite calandre (18 ; 40) pour transformer une bande (10) de matériau élastomère produite par l'extrudeuse (9) dans la bande (7) de section déterminée ; au moins un composant de la ligne d'alimentation étant actionné de façon à donner au matériau élastomère l'étirement supplémentaire en amont du premier étirement.

5. Méthode selon l'une des revendications précédentes, comprenant les étapes destinées à installer le corps (3) sur une broche (4) avec la surface annulaire (2) dans une position coaxiale par rapport à un axe (5) de la broche (4) ; amener la broche (4) en rotation autour de l'axe (5) de façon à donner à la surface annulaire (2), au niveau du point d'application (35), une vitesse d'application déterminée ; et déplacer en va-et-vient le rouleau applicateur (11) et la broche (4) pour amener le point d'application (35) en brossage, avec ladite vitesse d'application, de la totalité de la surface annulaire (2), la broche (4) étant alimentée à une vitesse angulaire variable de façon à maintenir la vitesse d'application toujours égale à une valeur constante déterminée ; et le rouleau applicateur (11) étant esclave par rapport à la broche (4) de façon à présenter une vitesse périphérique constante et à maintenir égale à une valeur constante déterminée un différentiel de vitesse existant entre la vitesse d'application et la vitesse périphérique de façon à appliquer à la bande (7) ledit premier étirement constant dans le passage entre le rouleau applicateur (11) et la surface annulaire (2).

6. Méthode selon l'une des revendications précédentes, dans laquelle la surface annulaire (2) est caoutchoutée à chaud ; le matériau élastomère produit par l'extrudeuse (9) étant formé pour obtenir ladite bande (7), en utilisant seulement l'une desdites calandres (18) disposée immédiatement en amont du rouleau applicateur (11), et ledit étirement supplémentaire étant appliqué sur le passage de la bande (7) entre la calandre (18) et le rouleau applicateur (11).

7. Méthode selon l'une des revendications 1 à 5, dans laquelle la surface annulaire (2) est caoutchoutée à froid ; le matériau élastomère produit par l'extrudeuse (9) étant refroidi par un moyen de refroidissement (38) disposé en amont du rouleau applicateur (11) et étant formé pour obtenir ladite bande (7), au moyen de l'une desdites calandres (40) disposée immédiatement en amont du moyen de refroidissement (38) ; l'un desdits étirements supplémentaires étant appliqué pendant le passage de la bande (7) entre ladite calandre (40) et le moyen de refroidissement (38).

8. Méthode selon la revendication 7, dans laquelle ladite bande (7) est également formée par une autre calandre (18) disposée immédiatement en amont du rouleau applicateur (11) ; l'un desdits étirements supplémentaires étant appliqué pendant le passage de la bande (7) entre ladite autre calandre (18) et le rouleau applicateur (11).

9. Méthode selon la revendication 7, dans laquelle ladite bande (7) est également formée par une autre calandre (18) disposée immédiatement en amont du rouleau applicateur (11), et est alimentée à ladite autre calandre (18) par une courroie de transporteur (15) ; l'un desdits étirements supplémentaires étant appliqué pendant le passage de la bande (7) entre la courroie de transporteur (15) et ladite autre calandre (18 ; 40,18).

10. Machine pour caoutchouter une surface annulaire (2) d'un corps (3), la machine (1 ; 37) comprenant une broche (4) présentant un axe (5) et étant adapté pour supporter le corps (3) avec la surface annulaire (2) devant être caoutchouté coaxial à l'axe (5) ; un premier moyen d'entraînement (6) pour amener la broche (4) en rotation autour de l'axe (5) ; et une unité d'alimentation (8) adaptée pour alimenter sur la surface annulaire (2) une bande (7) de matériau élastomère présentant une section de forme déterminée ; l'unité d'alimentation (8) comprenant une extrudeuse (9) pour la production de matériau élastomère sous la forme d'une bande (10), une calandre (18 ; 40) pour transformer la bande (10) de matériau élastomère produite par l'extrudeuse (9) dans la bande (7) de section déterminée, un rouleau applicateur (11) disposé en aval de la calandre (18 ; 40), ayant, pendant l'utilisation, une vitesse périphérique et disposé, pendant l'utilisation, de manière tangentielle à la surface annulaire (2) devant être caoutchoutée au niveau d'un point d'application (35) de la bande (7) sur la surface annulaire (2) même et mobile par rapport à la broche (4) pour amener le point d'application (35) en brossage, avec une vitesse d'application déterminée égale à la vitesse du point d'application (35) autour de l'axe (5), de la totalité de la surface annulaire (2) en conjonction avec une rotation de la broche autour de l'axe (5) même ; la machine étant **caractérisée en ce que** le rouleau applicateur (11) est esclave par rapport à la broche (4) de façon à maintenir égale à une valeur constante déterminée le différentiel de vitesse existant entre la vitesse d'application et la vitesse périphérique pour appliquer à la bande (7) un premier étirement constant pendant le passage entre le rouleau applicateur (11) et la surface annulaire (2) ; et **en ce que** l'unité d'alimentation (8) est formée de façon à appliquer à la bande (7) un étirement supplémentaire en amont du premier étirement.

11. Machine selon la revendication 10, dans laquelle l'unité d'alimentation (8) comprend une ligne d'alimentation (14) du matériau élastomère de l'extrudeuse (9) au rouleau applicateur (11), et la ligne d'alimentation (14) comprend une pluralité de composants disposés en série, dont au moins un est ladite calandre (18 ; 40) pour transformer la bande (10) de matériau élastomère produite par l'extrudeuse (9) dans la bande (7) de section déterminée ; au moins un composant de la ligne d'alimentation (14) étant un composant motorisé doté d'autres moyens d'entraînement pour donner au matériau élastomère un étirement supplémentaire en amont du premier étirement.

12. Machine selon la revendication 11, dans laquelle les autres moyens d'entraînement sont ajustés de telle sorte que ledit étirement supplémentaire entraîne une valeur constante.

13. Machine selon la revendication 12, dans laquelle l'autre moyen d'entraînement est ajusté de telle sorte que ledit étirement supplémentaire entraîne une valeur variable selon une loi déterminée.

14. Machine selon l'une des revendications 11 à 13, dans laquelle la ligne d'alimentation (14) comprend une courroie de transporteur (15) et des premier et second dispositifs de rouleaux égoutteurs (17), (21) disposés entre l'extrudeuse (9) et la courroie de transporteur (15) et, respectivement, entre la courroie de transporteur (15) et la calandre (18) ; la calandre (18) étant ledit composant motorisé.

15. Machine selon la revendication 14, dans laquelle le premier dispositif de rouleau égoutteur (17) commande la courroie de transporteur (15), tandis que le second dispositif de rouleau égoutteur (21) commande la vitesse périphérique de la broche (4).

16. Machine selon la revendication 14, dans laquelle le premier dispositif de rouleau égoutteur (17) commande la courroie de transporteur (15) tandis que le second dispositif de rouleau égoutteur (21) commande l'extrudeuse (9).

17. Machine selon l'une des revendications 11 à 13, dans laquelle la ligne d'alimentation (14) comprend une calandre (40), un rouleau de refroidissement (38) disposé en aval de la calandre (40) et un premier et un second dispositif de rouleau égoutteur (17), (21) disposés entre l'extrudeuse (9) et la calandre (40) et, respectivement, en aval du rouleau de refroidissement (38) ; la calandre (40) étant ledit composant motorisé.

18. Machine selon la revendication 17, dans laquelle la ligne d'alimentation (14) comprend une première calandre (40) ; un rouleau de refroidissement (38) disposé en aval de la première calandre (40) ; une courroie de transporteur (15) ; une seconde calandre (18) ; et un premier et un second dispositif de rouleau égoutteur (17, 21) disposés entre l'extrudeuse (9) et la première calandre (40) et, respectivement, entre le rouleau de refroidissement (38) et la courroie de transporteur (15) ; au moins l'une desdites première et seconde calandres (40, 18) et la courroie de transporteur (15) étant l'un desdits éléments motorisés.

19. Machine selon la revendication 17 ou 18, dans laquelle le premier dispositif de rouleau égoutteur (17) commande l'extrudeuse (9), tandis que le second dispositif de rouleau égoutteur (21) est simplement un compensateur mécanique.
